# EUROPÄISCHE PATENTSCHRIFT

(11) **EP 1 327 539 B1**
(45) Veröffentlichungstag und Bekanntmachung des Hinweises auf die Patenterteilung: **17.08.2005**
(21) Anmeldenummer: 02027738.0
(22) Anmeldetag: 11.12.2002
(51) Int. Cl.: B60G 15/12, F16F 9/05

(54) **Luftfederbein für Kraftfahrzeuge**
Air spring strut
Jambe de ressort pneumatique

(30) Priorität: 10.01.2002 DE 10200632
(43) Veröffentlichungstag der Anmeldung: 16.07.2003
(73) Patentinhaber: ThyssenKrupp Bilstein GmbH, 58256 Ennepetal (DE)
(72) Erfinder: Fritz, Michael, Dipl.-Ing., 58313 Herdecke (DE)

(56) Entgegenhaltungen:
- EP-A- 1 079 138
- DE-A- 3 444 577
- DE-A- 4 327 585
- US-A- 3 000 625
- US-A- 4 768 758
- PATENT ABSTRACTS OF JAPAN vol. 009, no. 103 (M-377), 8. Mai 1985 (1985-05-08) -& JP 59 226725 A (BRIDGESTONE KK), 19. Dezember 1984 (1984-12-19)

## Beschreibung

Die Erfindung betrifft ein Luftfederbein nach dem Oberbegriff des Anspruchs 1.

Luftfederbeine werden verstärkt in komfortabel gefederten Fahrzeugen eingesetzt. Derartige Luftfederbeine sind beispielsweise aus der DE 198 19 642 A1 bekannt. Dabei ist innerhalb der Luftfeder, die im wesentlichen einen Rollbalg mit an seinem Ende angeordneten Abschluss- und Befestigungsteilen aufweist, ein hydraulischer Schwingungsdämpfer angeordnet, der am aus der Luftfeder herausragenden Ende ebenfalls Anschluss- und Befestigungsteile besitzt.

Zur Anpassung der Federrate bzw. der Dämpfung an das Fahrverhalten des Fahrzeuges, bezogen auf die Straßenlage, die Geschwindigkeit und andere Einflussgrößen, ist vorgesehen, dass der Dämpfer mit Regeleinrichtungen ausgebildet ist. Dieses ist insbesondere dann erforderlich, wenn starke Unebenheiten der Fahrbahn zu heftigen Ausschlägen des Rades führen. Um eine einwandfreie Haftung des Rades auf der Fahrbahn zu erreichen, muss dann eine harte Kennung der Fahrzeugaufhängung erreicht werden. Insbesondere bei luftgefederten Fahrzeugen, die eine möglichst weiche Radaufhängung erzielen sollen, bedeutet das für den Stoßdämpfer eine äußerst weite Regelbreite, was zu aufwendigen Stoßdämpferkonstruktionen mit intensiver Regelung führt.

Aus der US 3,000,625 A ist ein gattungsgemäßes Luftfederbein bekannt. Bei diesem Luftfederbein ist das Ventil, mit dem die Verbindung zwischen dem ersten und dem weiteren Gasraum verschlossen werden kann, als an der Kolbenstange des Schwingungsdämpfers befestigter Teller ausgebildet und wirkt mit einem glockenförmigen Ventilsitz zusammen. Zwischen Ventilsitz und Teller sind Schraubenfedern angeordnet, die den Teller auf Spannung in einer Ruheposition halten. Das Verschließen des weiteren Gasraumes erfolgt hier wegabhängig, d.h. dass das Schließen des Ventils abhängig von Eintauchen der Kolbenstange in das Schwingungsdämpferrohr und vom Überwinden der in Reihe geschalteten Schraubenfedern erfolgt. Dies hat den Nachteil, dass eine Änderung der Federrate bzw. der Dämpfung des Luftfederbeins z.B. von weich nach hart im Falle von plötzlich auftretenden Fahrbahnunebenheiten vergleichsweise langsam erfolgt. Dadurch schaltet das bekannte Luftfederbein erst mit einer Zeitverzögerung auf eine harte Dämpfung um, wodurch das Fahrverhalten und damit die Fahrsicherheit negativ beeinflusst werden.

Der Erfindung liegt die Aufgabe zugrunde, ein Luftfederbein derartig auszubilden, dass bei der Erfordernis einer harten Radaufhängung der Stoßdämpfer von seiner hohen Dämpfungswirkung entlastet werden kann, wobei gleichzeitig die Fahrsicherheit im Falle plötzlich auftretender Fahrbahnunebenheiten optimiert wird.

Diese Aufgabe wird erfindungsgemäß durch die Merkmale des Anspruchs 1 gelöst. Vorteilhafte Aus- und Weiterbildungen sind in den Ansprüchen 2 bis 11 beschrieben. Die mit der Erfindung erzielten Vorteile bestehen insbesondere darin, dass auch die Luftfeder eine verstellbare Kennung von weicher Federkennlinie und harter Federkennlinie ermöglicht, wobei sich die Verstellung bei starken Ausschlägen des Rades gegenüber dem Fahrzeugaufbau zwangsläufig und abhängig von der Größe der Abstützkraft der Kolbenstange gegen den Fahrzeugaufbau von weich auf hart einstellt. Auf diese Weise wird eine schnelle Verstellung des Dämpfungsverhaltens erreicht, sodass die Fahrsicherheit erhöht wird. Umgekehrt stellt sich automatisch eine weiche Federkennlinie ein, sobald die Radaufhängig gegenüber dem Fahrzeugaufbau nur geringe langwellige Bewegungen ausführt.

Ein Ausführungsbeispiel der Erfindung ist in der Zeichnung dargestellt und wird im Folgenden näher beschrieben. Es zeigen
Fig. 1 einen Längsschnitt durch ein Luftfederbein und
Fig. 2 eine vergrößerte Darstellung des oberen Teils nach Fig. 1.

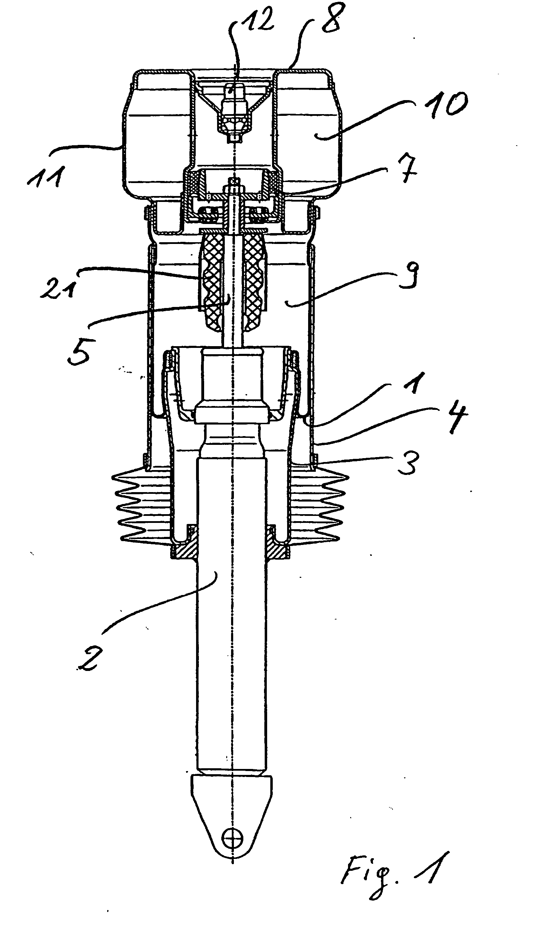

Luftfederbeine bestehen vorzugsweise aus einer Luftfeder, innerhalb derer ein hydraulischer Schwingungsdämpfer angeordnet ist. Wie aus Fig. 1 erkennbar, besteht die Luftfeder im Wesentlichen aus einem Rollbalg 1, der einerseits gegenüber dem Dämpferzylinder 2 und andererseits gegenüber einer Befestigungseinrichtung zum Befestigen der Luftfeder am Fahrzeugaufbau abdichtend angeschlossen ist. Der Rollbalg 1 wird stoßdämpferseitig nach innen über einen Abrollmantel 3 und nach außen über einen Haltezylinder 4 geführt. Der Schwingungsdämpfer weist einen Dämpferzylinder 2 und eine oszillierend in diesen eintauchende Kolbenstange 5 auf. Am Ende der Kolbenstange 5 befindet sich eine Aufhängeglocke 6, die außenseitig, vorzugsweise axial elastisch, über ein Schwingelement 7 an einem Tragzylinder 8 angebunden ist. Der Tragzylinder 8 ist in geeigneter Weise am nicht dargestellten Fahrzeugaufbau befestigt.

Im Wesentlichen oberhalb der die Kolbenstangenaufhängung tragenden Aufhängeglocke 6 befindet sich zusätzlich von dem vom Rollbalg 1 umschlossenen ersten Gasraum 9 ein weiterer Gasraum 10. Dieser weitere Gasraum 10 weist ein nicht veränderliches Volumen auf und wird im Wesentlichen gehalten vom Tragzylinder 8. Er erstreckt sich innerhalb und außerhalb des Tragzylinders 8 und wird außen durch einen festen Mantel 11 umschlossen. Zum Füllen beider Gasräume 9, 10 ist innerhalb des Tragzylinders 8 ein Füllventil 12 vorgesehen.

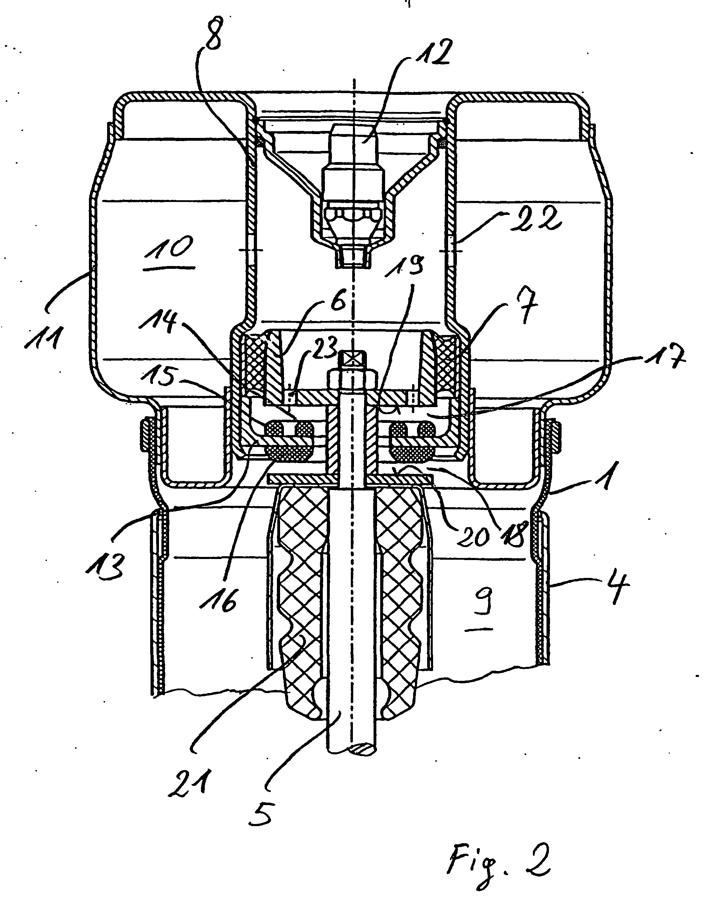

Die beiden Gasräume 9, 10 sind über ein Ventil gegeneinander teilweise oder vollständig absperrbar. Dieses Ventil ist in Fig. 2 vergrößert dargestellt. Es weist zum einen eine Dichtscheibe 13 auf, die im Ausführungsbeispiel fest am Tragzylinder 8 angebunden ist und dadurch indirekt fest am Fahrzeugaufbau. Die Dichtscheibe trägt beidseitig Dichtkanten 14, 15, 16. Diese Dichtkanten 14, 15, 16 sind im Ausführungsbeispiel elastisch nachgiebige, kreisförmig ausgebildete Dichtlippen. Die beiden oberen Dichtkanten 14, 15 lassen zwischeneinander einen Ringraum frei. In einem jeweils vorgegebenen Abstand 17, 18 von den Dichtkanten 14, 15, 16 sind Anlageflächen 19, 20 vorgesehen. Beide Anlageflächen 19, 20 sind fest mit dem Kolbenstangenende verbunden. Die obere Anlagefläche 19 wird vom Boden der Aufhängeglocke 6 gebildet. Die untere Auflagefläche 20 ist eine Scheibe, die am Ende der Kolbenstange 5 oberhalb des Druckanschlagpuffers 21 liegt.

Die in Fig. 2 dargestellte Position des Ventils entspricht der Position des Gasfederbeins in Ruhelage. Hierbei sind die Abstände 17, 18 etwa gleich groß. Durch Verbindungsbohrungen 22, 23 durch den Tragzylinder 8 und die Aufhängeglocke 6 ist das Ventil mit dem weiteren Gasraum 10 verbunden. Im Ruhezustand kann somit ein freier Gasaustausch zwischen dem ersten Gasraum 9 und dem weiteren Gasraum 10 stattfinden.

Aufgrund der in Achsrichtung elastischen Aufhängung der Kolbenstange 5 über das Schwingelement 7 bewegen sich die Kolbenstange 5 und mit ihr die Anlageflächen 19, 20 je nach der Größe der Abstützkraft der Kolbenstange 5 gegenüber dem Tragzylinder 8 und damit dem Fahrzeugaufbau nach oben oder nach unten. Dabei verringert sich je nach Kraftrichtung der eine oder der andere Abstand 17, 18 bis zur Anlage einer Dichtkante 14, 15, 16 gegen eine Anlagefläche 19, 20, wodurch das durch sie gebildete Ventil geschlossen ist. In diesem Zustand federt nur noch der erste Gasraum 9, wodurch eine harte Federkennlinie erzielt wird. Durch die harte Federkennlinie wird erreicht, dass bei starker Relativbewegung zwischen Rad und Fahrzeugaufbau eine sichere Straßenlage erzielt wird.

Sobald die starke Relativbewegung zwischen Rad und Fahrzeugaufbau abnimmt, wird der Strömungsweg zwischen dem ersten Gasraum 9 und dem weiteren Gasraum 10 wieder mehr oder weniger freigegeben.

Die Dichtkanten 14, 15, 16 können verschiedenartigste Ausbildungen aufweisen. Sie können wie gezeigt, einen wulstartigen Querschnitt aufweisen, aber auch mit Dichtlippen versehen sein. Darüber hinaus können sie ausschließlich oder zusätzlich zu anderen Bauteilen Aufgaben als Zug- oder Druckanschlag übernehmen. Die Kantenform der Lippen der Dichtkanten 14, 15, 16 kann zur Abstimmung der Federkennlinien der Luftfeder variiert werden. Zusätzlich kann aber auch der Druckanschlagpuffer 21 mit in die Regelung des Ventils einbezogen werden. Wenn dieser an den Stoßdämpfer anschlägt wird das Schließen des Abstandes 18 unterstützt.

Eine weitere Einstellung des Regelverhaltens des Ventils erfolgt durch die Variation der Form und/oder der Härte des Schwingelementes 7. Das Schwingelement 7 kann aus einem gummielastischen Werkstoff, aber auch durch eine Metallfeder, wie beispielsweise eine Tellerfeder, gebildet sein. Auch Kombinationen sind möglich.

Andere Gestaltungen der Anordnungen und Gestaltungen der Gasräume 9, 10 und des Ventils sind denkbar. Insbesondere kann das Ventil kinematisch umgekehrt derartig ausgebildet sein, dass die Dichtscheibe 13 an der Kolbenstange 5 angebunden ist. Dann sind selbstverständlich die Anlageflächen 19, 20 an einem mit dem Fahrzeugaufbau verbundenen Bauteil befestigt.

### Bezugszeichenliste

- 1.: Rollbalg
- 2.: Dämpferzylinder
- 3.: Abrollmantel
- 4.: Haltezylinder
- 5.: Kolbenstange
- 6.: Aufhängeglocke
- 7.: Schwingelement
- 8.: Tragzylinder
- 9.: Gasraum
- 10.: Gasraum
- 11.: Mantel
- 12.: Füllventil
- 13.: Dichtscheibe
- 14.: Dichtkante
- 15.: Dichtkante
- 16.: Dichtkante
- 17.: Abstand
- 18.: Abstand
- 19.: Anlagefläche
- 20.: Anlagefläche
- 21.: Druckanschlagpuffer
- 22.: Verbindungsbohrung
- 23.: Verbindungsbohrung

## Patentansprüche

1. Luftfederbein für Kraftfahrzeuge, bestehend aus einem auf einem Abrollmantel (3) abrollbaren, einen Gasraum (9) einschließenden Rollbalg (1), einem innerhalb des Rollbalges (1) und/oder des Abrollmantels (3) angeordneten hydraulischen Schwingungsdämpfer mit einer in diesen oszillierend eintauchenden Kolbenstange (5), deren Ende in Achsrichtung elastisch direkt oder indirekt am Fahrzeugaufbau befestigbar ist, wobei das Luftfederbein einen mit dem ersten Gasraum (9) verbindbaren weiteren Gasraum (10) aufweist und die Verbindung zwischen dem ersten Gasraum (9) und dem weiteren Gasraum (10) über ein Ventil ganz oder teilweise verschließbar ist, **dadurch gekennzeichnet, dass** das Ventil, abhängig von der Größe der Abstützkraft der Kolbenstange (5) gegen den Fahrzeugaufbau, mehr oder minder schließt.

2. Luftfederbein nach Anspruch 1, **dadurch gekennzeichnet, dass** das Ventil völlig geöffnet ist, wenn die Kolbenstange (5) keine Abstützkraft gegen den Fahrzeugbau ausübt.

3. Luftfederbein nach Anspruch 1, **dadurch gekennzeichnet, dass** bei einer vorgegebenen Abstützkraft der Kolbenstange (5) gegen den Fahrzeugaufbau in Zug- oder Druckrichtung das Ventil geschlossen ist.

4. Luftfederbein nach einem oder mehreren der Ansprüche 1 bis 3, **dadurch gekennzeichnet, dass** das Ventil abhängig von der Relativbewegung zwischen Kolbenstange (5) und Fahrzeugaufbau gesteuert wird.

5. Luftfederbein nach einem oder mehreren der Ansprüche 1 bis 4, **dadurch gekennzeichnet, dass** einer der Gasräume (9) im wesentlichen unterhalb des Kolbenstangenendes angeordnet ist und der andere Gasraum (10) im Wesentlichen oberhalb des Kolbenstangenendes.

6. Luftfederbein nach einem oder mehreren der Ansprüche 1 bis 5, **dadurch gekennzeichnet, dass** einer der Gasräume (10) ein gleich bleibendes Volumen aufweist.

7. Luftfederbein nach einem oder mehreren der Ansprüche 1 bis 6, **dadurch gekennzeichnet, dass** das Ventil eine Dichtscheibe (13) mit beidseitig angeordneten Dichtkanten (14, 15, 16) aufweist, die gegen mit einem jeweiligen Abstand (17, 18) zu den Dichtkanten (14, 15, 16) angeordneten plattenförmigen Anlageflächen (19, 20) abdichten.

8. Luftfederbein nach Anspruch 7, **dadurch gekennzeichnet, dass** die Dichtscheibe (13) an einem mit dem Fahrzeugaufbau verbindbaren Bauteil oder der Kolbenstange (5) und die Anlageflächen (19, 20) an der Kolbenstange (5) oder einem mit dem Fahrzeugaufbau verbindbaren Bauteil angebunden sind.

9. Luftfederbein nach einem der Ansprüche 7 oder 8, **dadurch gekennzeichnet, dass** die Dichtkanten (14, 15, 16) als elastisch nachgebende Dichtlippen, vorzugsweise aus Gummi oder Kunststoff, ausgebildet sind.

10. Luftfederbein nach einem oder mehreren der Ansprüche 7 bis 9, **dadurch gekennzeichnet, dass** die Dichtkanten (14, 15, 16) auch als mechanische Zug- oder Druckanschläge dienen.

11. Luftfederbein nach einem oder mehreren der Ansprüche 7 bis 10, **dadurch gekennzeichnet, dass** das Reduzieren des Abstandes (18) zwischen der Dichtkante (16) und der Anlagefläche (20) bei Anlage des Stoßdämpfers an einen Druckanschlagpuffer (21) durch diesen unterstützt wird.

## Claims

1. Pneumatic shock absorbing leg for motor vehicles, consisting of a rolling gaiter seal (1), which can roll on a roll periphery (3) and which encompasses a gas chamber (9), a hydraulic vibration damper which is disposed inside the rolling gaiter seal (1) and/or inside the roll periphery (3) and which comprises a piston rod (5) which is received therein in an oscillating manner, and the end of the said piston rod can be attached in the axial direction in a resilient manner directly or indirectly to the vehicle body, wherein the Pneumatic shock absorbing leg comprises a further gas chamber (10) which can be connected to the first gas chamber (9) and the connection between the first gas chamber (9) and the further gas chamber (10) can be wholly or partially closed by a valve, **characterised in that** the valve more or less closes depending upon the amount of the supporting force of the piston rod (5) against the vehicle body.

2. Pneumatic shock absorbing leg as claimed in claim 1, **characterised in that** the valve is fully open if the piston rod (5) is not exerting any supporting force against the vehicle body.

3. Pneumatic shock absorbing leg as claimed in claim 1, **characterised in that** the valve is closed if a predetermined supporting force is exerted by the piston rod (5) against the vehicle body in the drawing or pushing direction.

4. Pneumatic shock absorbing leg as claimed in any one or several of claims 1 to 3, **characterised in that** the valve is controlled in dependence upon the relative movement between the piston rod (5) and the vehicle body.

5. Pneumatic shock absorbing leg as claimed in any one or several of claims 1 to 4, **characterised in that** one of the gas chambers (9) is disposed substantially below the piston rod end and the other gas chamber (10) is disposed substantially above the piston rod end.

6. Pneumatic shock absorbing leg as claimed in any one or several of claims 1 to 5, **characterised in that** one of the gas chambers (10) comprises a constant volume.

7. Pneumatic shock absorbing leg as claimed in any one or several of claims 1 to 6, **characterised in that** the valve comprises a sealing disc (13) having disposed on both sides sealing edges (14, 15, 16) which provide a sealing arrangement against plate-shaped contact surfaces (19, 20) which are disposed at a respective spaced disposition (17, 18) with respect to the sealing edges (14, 15, 16).

8. Pneumatic shock absorbing leg as claimed in claim 7, **characterised in that** the sealing disc (13) is connected to a component, which can be connected to the vehicle body, or the piston rod (5) and the contact surfaces (19, 20) are connected to the piston rod (5) or to a component which can be connected to the vehicle body.

9. Pneumatic shock absorbing leg as claimed in any one of claims 7 or 8, **characterised in that** the sealing edges (14, 15, 16) are formed as resiliently yielding sealing lips consisting preferably of rubber or synthetic material.

10. Pneumatic shock absorbing leg as claimed in any one or several of claims 7 to 9 **characterised in that** the sealing edges (14, 15, 16) also serve as mechanical drawing or pushing stops.

11. Pneumatic shock absorbing leg as claimed in any one or several of claims 7 to 10, **characterised in that** the contacting of the shock absorber with a pushing stop buffer (21) assists the process of reducing the spacing (18) between the sealing edge (16) and the contact surface (20).

## Revendications

1. Jambe de force pneumatique pour véhicule, constituée d'un soufflet roulant (1) renfermant une chambre à gaz (9), pouvant rouler sur un manchon de déroulement (3), d'un amortisseur hydraulique agencé dans le soufflet (1) et/ou le manchon de déroulement (3), avec une tige de piston (5) plongeant dans celui-ci de manière oscillante, dont l'extrémité dans la direction axiale peut être fixée élastiquement, de manière directe ou indirecte, au châssis du véhicule, dans laquelle la jambe de force pneumatique présente une autre chambre à gaz (10) pouvant être reliée à la première chambre à gaz (9), et la liaison entre la première chambre à gaz (9) et la chambre à gaz supplémentaire (10) peut être fermée totalement ou partiellement par l'intermédiaire d'une soupape, **caractérisée en ce que** la soupape se ferme plus ou moins en fonction de la grandeur de la force d'appui de la tige de piston (5) sur le châssis du véhicule.

2. Jambe de force pneumatique selon la revendication 1, **caractérisée en ce que** la soupape est complètement ouverte lorsque la tige de piston (5) n'exerce aucune force d'appui sur le châssis du véhicule.

3. Jambe de force pneumatique selon la revendication 1, **caractérisée en ce que** la soupape est fermée pour une force d'appui prédéterminée de la tige de piston (5) sur le châssis du véhicule, en traction ou en compression.

4. Jambe de force pneumatique selon une ou plusieurs des revendications 1 à 3, **caractérisée en ce que** la soupape est commandée en fonction du déplacement relatif entre la tige de piston (5) et le châssis du véhicule.

5. Jambe de force pneumatique selon une ou plusieurs des revendications 1 à 4, **caractérisée en ce que** l'une des chambres à gaz (9) est agencée sensiblement en dessous de l'extrémité de la tige de piston, et l'autre chambre à gaz (10) sensiblement au dessous de l'extrémité de la tige de piston

6. Jambe de force pneumatique selon une ou plusieurs des revendications 1 à 5, **caractérisée en ce que** l'une des chambres à gaz (10) présente un volume qui reste constant.

7. Jambe de force pneumatique selon une ou plusieurs des revendications 1 à 6, **caractérisée en ce que** la soupape présente un disque d'étanchéité (13) avec des arêtes d'étanchéité (14, 15, 16) de chaque côté, lesquelles assurent une étanchéité contre des surfaces de contact (19, 20) en forme de plateau, agencées à une distance (17, 18) correspondante des arêtes d'étanchéité (14, 15, 16).

8. Jambe de force pneumatique selon la revendication 7, **caractérisée en ce que** le disque d'étanchéité (13) est relié à une pièce pouvant être fixée au châssis du véhicule ou à la tige de piston (5), et les surfaces de contact (19, 20) sont reliées à la tige de piston (5) ou à une pièce pouvant être fixée au châssis du véhicule.

9. Jambe de force pneumatique selon la revendication 7 ou 8, **caractérisée en ce que** les arêtes d'étanchéité (14, 15, 16) sont réalisées sous la forme de lèvres d'étanchéité élastiquement déformables, de préférence en caoutchouc ou en matière synthétique.

10. Jambe de force pneumatique selon une ou plusieurs des revendications 7 à 9, **caractérisée en ce que** les arêtes d'étanchéité (14, 15, 16) servent également de butées mécaniques de compression ou de traction.

11. Jambe de force pneumatique selon une ou plusieurs des revendications 7 à 10, **caractérisée en ce que** la réduction de la distance (18) entre l'arête d'étanchéité (16) et la surface de contact (20) lors du contact de l'amortisseur avec une butée élastique de compression (21) est soutenue par celle-ci.
